# FASCICULE DE BREVET EUROPEEN

(11) **EP 0 427 593 B1**
(45) Date de publication et mention de la délivrance du brevet: **15.12.1993**
(21) Numéro de dépôt: 90403049.1
(22) Date de dépôt: 29.10.1990
(51) Int. Cl.: B60N 3/14

(54) **Allume-cigare, notamment pour véhicule automobile**
Zigarrenanzünder, insbesondere für ein Kraftfahrzeug
Cigar lighter especially for a motor car

(30) Priorité: 08.11.1989 FR 8914647
(43) Date de publication de la demande: 15.05.1991
(73) Titulaire: Société Anonyme dite: VALEO NEIMAN, 78290 Croissy-sur-Seine (FR)
(72) Inventeur: Mallet, Christian, F-91490 Milly-la-Foret (FR)
(74) Mandataire: Gamonal, Didier

(56) Documents cités:
- DD-A- 57 516
- FR-A- 2 371 641
- FR-A- 2 630 057

## Description

La présente invention se rapporte à un allume-cigare, notamment pour véhicule automobile.

Un tel allume-cigare est décrit, par exemple, dans le document FR-A-2 630 057 et comporte (figure 1) un corps d'allumage 1, solidaire de la carrosserie du véhicule usuellement par l'intermédiaire d'une bague 7 conductrice de lumière.

Un bouchon 2 est logé dans le corps 1 et porte une résistance chauffante propre à coopérer avec un élément d'accrochage bi-métallique solidaire du corps 1.

Ce bouchon 2 comporte un capuchon de préhension 9 annulaire, qui entoure un corps annulaire 10, ou bouton de commande, solidaire d'une partie mobile 17, portant ladite résistance.

Le capuchon 9 n'entoure que latéralement le corps 10 et laisse un libre accès à la face frontale 14 de celui-ci, tout en protègeant ledit corps 10.

La partie 17 est mobile à l'encontre d'un ressort 20 s'appuyant sur un guide 19 de ladite partie 17. Le guide 19 est solidaire du capuchon 9.

Une telle disposition donne satisfaction, lorsque l'allume-cigare est monté sur une console.

Dans ce cas le capuchon de préhension a également une fonction de sécurité, l'usager pouvant suspendre un sac à main ou analogue sur ledit capuchon sans que l'allume-cigare se mette à fonctionner.

Lorsque l'allume-cigare doit être par contre implanté, par exemple, au niveau du cendrier, et que l'accès disponible est réduit, cette disposition ne convient pas, car le capuchon augmente la taille du bouchon et limite l'accès.

Pour pallier cet inconvénient, on peut songer à enlever le capuchon, au détriment d'une standardisation de la fabrication.

La présente invention a pour objet de pallier ces inconvénients et donc de créer un nouvel allume-cigare à bouchon doté d'un capuchon de préhension, qui puisse être monté dans un espace réduit.

Suivant l'invention un allume-cigare du type susindiqué est caractérisé en ce que le bouton de commande constitue localement une seconde partie de préhension à la faveur d'évidements locaux, que présente latéralement le capuchon pour accès audit bouton.

Grâce à l'invention la fabrication de l'allume-cigare peut être standardisée, tout en procurant une grande sécurité.

Lorsque ledit allume-cigare est implanté, par exemple, sur une console, le capuchon constitue une première partie de préhension, tout en protégeant le bouton de commande, tandis que lorsque ledit allume-cigare est implanté dans un espace réduit, le bouton de commande constitue une seconde partie de préhension.

On appréciera également que la disposition est esthétique.

La description en annexe illustre l'invention, à titre d'exemple, en référence aux dessins annexés dans lesquels :
- la figure 1 est une vue en coupe axiale d'un allume-cigare identique à la figure 1 du document FR-A-2 630 057 ;
- la figure 2 est une vue partielle en perspective d'un allume-cigare, selon l'invention, avec son bouchon et son corps d'allumage ;
- la figure 3 est une vue partielle montrant l'implantation dudit allume-cigare au niveau d'un cendrier du véhicule automobile avec représentation des doigts de l'usager ;
- la figure 4 est une vue partielle montrant l'implantation de l'allume-cigare selon l'invention, au niveau d'une console.

Par simplification les éléments communs à l'invention et à l'Art Antérieur seront affectés des mêmes références que celles du document FR-A-2 630 057 considéré comme annexé à la présente description.

On rappellera, que le corps 10, ou bouton de commande, est mobile axialement par rapport au capuchon de préhension 9 strié, grâce au guide 19 et que le bouton 10 est un bouton poussoir se déplaçant à l'encontre de l'action exerçée par le ressort 20, qui en position initiale, le maintient à distance de la partie bimétallique du corps d'allumage 1 connecté à la source de tension du véhicule.

Le corps d'allumage 1, le bouton 10 et le capuchon 9 ont une forme annulaire, ici cylindrique à section circulaire.

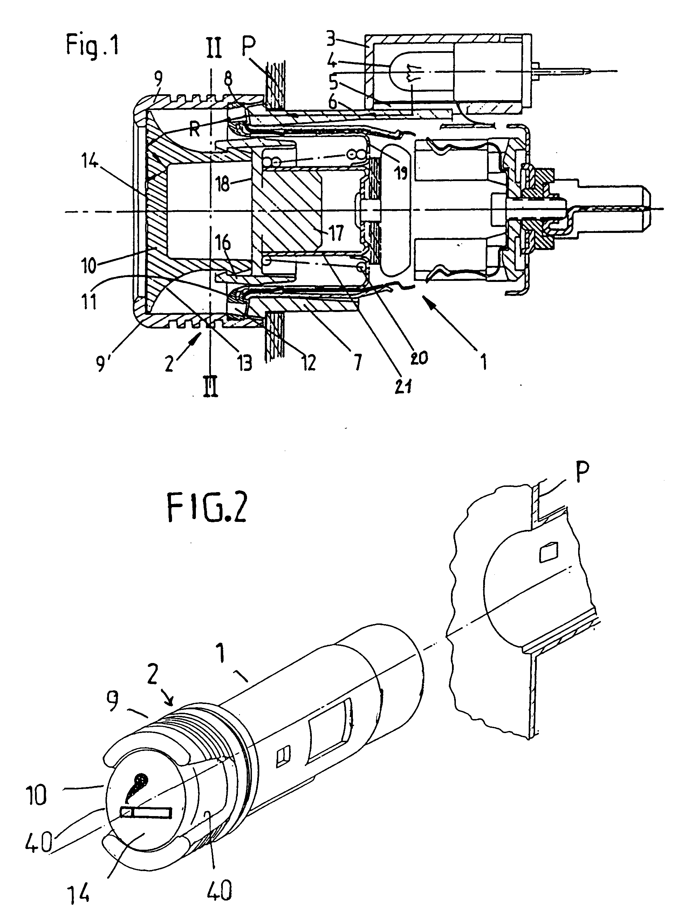

A la figure 2, on voit en 1 le corps d'allumage, et en 2 le bouchon de l'allume-cigare, qui n'est pas encore monté sur véhicule, la référence P indiquant la paroi solidaire du véhicule sur laquelle doit être monté l'allume-cigare.

Suivant l'invention le bouton de commande 10 constitue localement une seconde partie de préhension à la faveur d'évidements locaux 40 que présente latéralement le capuchon 9 pour accès audit bouton 10.

Ici (figure 2), la face frontale 14 du bouton 10 comporte un revêtement partiel laissant apparaître le symbole de l'allume-cigare, permettant à l'usager de répérer ledit bouton 10.

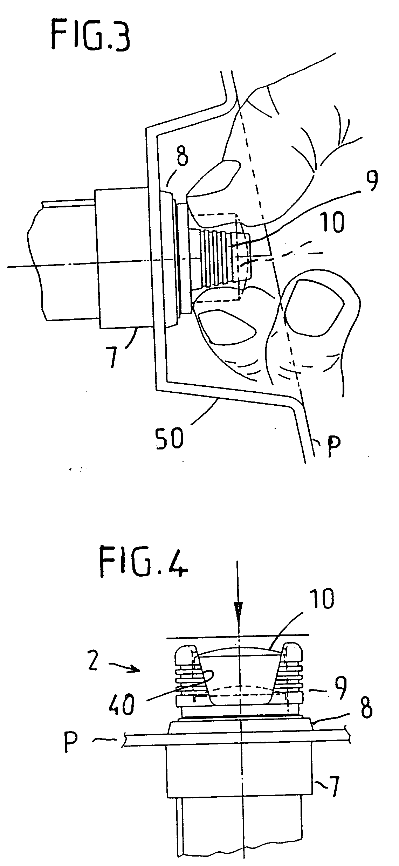

Dans les figures 2 à 4, le capuchon 9 est de taille réduite et est solidaire du guide 19 en étant dépourvu de la bague 11 de la figure 1, en sorte que le diamètre du capuchon 9 est légèrement inférieur à celui de la face frontale 8 de la bague éclairante 7 (figures 3 et 4).

Il en est de même pour le bouton 10 qui est de taille réduite puisque logé à l'intérieur du capuchon 9, ledit bouton 10, ayant une face frontale 14 bombée.

Le capuchon 9, en matériau électriquement et thermiquement isolant, entoure latéralement le bouton 10 et est ouvert pour donner un libre accès à ladite face 14, la hauteur du capuchon 9 étant calculée pour que le bouton 10 soit en retrait par rapport à l'extrémité axiale libre du capuchon 9 opposée à la bague 8 (figure 4).

Lorsque l'allume-cigare est implanté au niveau d'un cendrier (figure 3), et que l'espace d'accès est réduit, notamment à cause d'un renfoncement 50, l'usager, dont on voit les doigts, peut faire fonctionner ledit allume-cigare sans problème et saisir le bouchon 2 grâce aux évidements 40 lui permettant d'accéder au bouton 10.

Ici, les évidements 40 sont globalement diamétralement opposés et ils s'étendent globalement axialement, parallèlement à l'axe de l'allume-cigare. Ces évidements 40 sont ouverts en direction de la face frontale 14, tout en étant fermés à leur autre extrémité, en sorte que la résistance du capuchon 9 échancrée n'est pas affectée outre mesure par la disposition selon l'invention.

Ces évidements 40 ou échancrures sont évasés en direction de la face frontale 14.

Ils ont globalement une forme complémentaire à celle du pouce de l'usager.

L'allume-cigare peut être alors aisément monté sur une console, ou toute liberté d'accès est présente (figure 4).

Dans cette configuration alors que dans la disposition de la figure 3, l'usager n'avait pas la possibilité de suspendre un quelconque objet sur le bouchon, une telle possibilité est offerte, sans qu'un quelconque accident en résulte.

En effet par exemple si l'usager suspend un sac à main après le bouchon, il ne peut le faire que sur le capuchon 9 qui protège latéralement le bouton 10 et ne permet pas au sac d'accéder à celui-ci, même à travers les évidements 40.

Un actionnement de l'allume-cigare est alors impossible. En fonctionnement normal, il suffit d'appuyer sur le bouton poussoir 10 pour enfoncer celui-ci dans le corps d'allumage 1 et chauffer la résistance par coopération avec la partie bi-métallique du corps 1.

Bien entendu la présente invention n'est pas limitée à l'exemple de réalisation décrit, l'allume-cigare pouvant être implanté dans un endroit peu accessible autre qu'au niveau du cendrier.

Le bouton 10 peut être, tout comme le capuchon 9, strié localement, pour faciliter encore la préhension.

En variante ce bouton 10 peut être de forme tronconique, comme à la figure 1.

Enfin la présence d'une bague éclairante 7 n'est pas nécessaire dans certains cas, comme montré par exemple dans le document FR-A-2 371 641.

## Revendications

1. Allume-cigare, notamment pour véhicule automobile du genre comportant un bouchon (2) propre à être logé dans un corps d'allumage (1), ledit bouchon (2) comportant un capuchon de préhension et de protection (9) entourant latéralement un bouton de commande (10) mobile par rapport audit capuchon (9), dans lequel ledit capuchon (9) laisse un libre accès à la face frontale (14) dudit bouton (10), caractérisé en ce que ledit bouton de commande (10) constitue localement une seconde partie de préhension, à la faveur d'évidements locaux (40), que présente latéralement le capuchon (9) pour accès audit bouton (10).

2. Allume-cigare selon la revendication 1, caractérisé en ce que ledit capuchon (9) comporte deux évidements (40) diamétralement opposés et fermés à l'une de leur extrémité.

3. Allume-cigare selon la revendication 2, caractérisé en ce que lesdits évidements (40) s'étendent globalement axialement et en ce qu'ils sont ouverts au niveau de la face frontale (14) du bouton de commande (10).

4. Allume-cigare selon la revendication 3, caractérisé en ce que les évidements (40) sont évasés en direction de la face frontale (14) du bouton de commande (10).

5. Allume-cigare selon la revendication 3 ou 4, caractérisé en ce que les évidements (40) ont globalement une forme complémentaire à celle du pouce de l'usager.

6. Allume-cigare selon l'une quelconque des revendications précédentes, caractérisé en ce que le bouton de commande (10) est strié.

7. Allume-cigare selon l'une quelconque des revendications précédentes, caractérisé en ce que ledit bouton (10) a une face frontale (14) bombée, tout en étant en retrait par rapport à l'extrémité axiale libre dudit capuchon (9).

8. Allume-cigare selon l'une quelconque des revendications précédentes, du genre comportant une bague éclairante (7) avec une face frontale (8), caractérisé en ce que ledit capuchon (9) est de taille réduite, son diamètre étant inférieur à celui de la face frontale (8) de la bague éclairante (7).

## Patentansprüche

1. Zigarrenanzünder, insbesondere für ein Kraftfahrzeug, enthaltend einen Stöpsel (2) zum Einsetzen in einen Zündkörper (1), wobei der genannte Stöpsel (2) eine Griff- und Schutzkappe (9) aufweist, die seitlich einen im Verhältnis zur genannten Kappe (9) beweglich angebrachten Betätigungsknopf (10) umgibt, während die genannte Kappe (9) freien Zugang zur Vorderseite (14) des genannten Knopfs (10) gestattet, **dadurch gekennzeichnet,** daß der genannte Betätigungsknopf (10) lokal einen zweiten Griffteil bildet, der durch lokale Aussparungen (40) gebildet wird, die die Kappe (9) seitlich aufweist, um den genannten Knopf (10) zugänglich zu machen.

2. Zigarrenanzünder nach Anspruch 1, **dadurch gekennzeichnet,** daß die genannte Kappe (9) zwei Aussparungen (40) aufweist, die einander diametral gegenüberliegen und die an einem Ende geschlossen sind.

3. Zigarrenanzünder nach Anspruch 2, **dadurch gekennzeichnet,** daß die genannten Aussparungen (40) sich im wesentlichen axial erstrecken und daß sie in Höhe der Vorderseite (14) des Betätigungsknopfs (10) offen sind.

4. Zigarrenanzünder nach Anspruch 3, **dadurch gekennzeichnet,** daß die Aussparungen (40) in Richtung der Vorderseite (14) des Betätigungsknopfs (10) konisch erweitert sind.

5. Zigarrenanzünder nach Anspruch 3 oder 4, **dadurch gekennzeichnet,** daß die Aussparungen (40) im wesentlichen eine Form haben, die zur Form des Daumens des Benutzers paßt.

6. Zigarrenanzünder nach einem der vorherigen Ansprüche, **dadurch gekennzeichnet,** daß der Betätigungsknopf (10) mit Rillen versehen ist.

7. Zigarrenanzünder nach einem der vorherigen Ansprüche, **dadurch gekennzeichnet,** daß der genannte Knopf (10) eine gewölbte Vorderseite (14) besitzt und im Verhältnis zum freien axialen Ende der genannten Kappe (9) einen Rücksprung aufweist.

8. Zigarrenanzünder nach einem der vorherigen Ansprüche, enthaltend einen Leuchtring (7) mit einer vorderseite (8), **dadurch gekennzeichnet,** daß die genannte Kappe (9) von reduzierter Größe ist, indem ihr Durchmesser geringer ist als derjenige der Vorderseite (8) des Leuchtrings (7).

## Claims

1. A cigar lighter, especially for a motor car, of the type comprising a plug (2) able to be housed in a lighter body (1), said plug (2) comprising a grip and protective cap (9) laterally surrounding a control knob (10) which can move with respect to said cap (9), in which said cap (9) leaves free access to the front face (14) of said knob (10),
**characterised in that** said control knob (10) locally forms a second grip part, by means of local recesses (40), which the cap (9) laterally displays for access to said knob (10).

2. A cigar lighter according to Claim 1,
**characterised in that** said cap (9) comprises two recesses (40) which are diametrically opposite and closed at one end.

3. A cigar lighter according to Claim 2,
**characterised in that** said recesses (40) all extend axially,
**and in that** they are open at the level of the front face (14) of the control knob (10).

4. A cigar lighter according to Claim 3,
**characterised in that** the recesses (40) are flared in the direction of the front face (14) of the control knob (10).

5. A cigar lighter according to Claim 3 or 4,
**characterised in that** the recesses (40) all have a shape which complements that of the user's thumb.

6. A cigar lighter according to any one of the above Claims,
**characterised in that** the control knob (10) is fluted.

7. A cigar lighter according to any one of the above Claims,
**characterised in that** said knob (10) has a convex front face (14), whilst being recessed with respect to the free axial end of said cap (9).

8. A cigar lighter according to any one of the above Claims, of the type comprising an illuminating ring (7) with a front face (8),
**characterised in that** said cap (9) has a reduced size, its diameter being less than that of the front face (8) of the illuminating ring (7).
